# EUROPÄISCHE PATENTSCHRIFT

(11) **EP 2 952 365 B1**
(45) Veröffentlichungstag und Bekanntmachung des Hinweises auf die Patenterteilung: **14.12.2016**
(21) Anmeldenummer: 15168971.8
(22) Anmeldetag: 22.05.2015
(51) Int. Cl.: B60C 23/00, F16L 27/087, B60B 27/00

(54) **DREHDURCHFÜHRUNG FÜR EIN KRAFTFAHRZEUGRAD**
ROTARY FEED-THROUGH FOR A MOTOR VEHICLE WHEEL
PASSAGE TOURNANT POUR ROUE DE VÉHICULE

(30) Priorität: 06.06.2014 DE 102014108028
(43) Veröffentlichungstag der Anmeldung: 09.12.2015
(73) Patentinhaber: Kessler & Co. GmbH & Co. KG, 73453 Abtsgmünd (DE)
(72) Erfinder: Bittlingmaier, Günter, 73432 Aalen-Ebnat (DE)
(74) Vertreter: Manitz, Finsterwald & Partner GbR

(56) Entgegenhaltungen:
- DE-A1-102009 057 158
- DE-C- 827 605
- DE-U1- 8 705 739

## Beschreibung

Die Erfindung betrifft eine Drehdurchführung für ein Kraftfahrzeugrad mit Reifendruckregelung.

Ein Rad eines Kraftfahrzeugs besitzt üblicherweise eine Radnabe, die an einem Radträger (z.B. Achsschenkel oder Achstrichter) drehbar gelagert ist. Für manche Anwendungen, beispielsweise bei schweren Nutzfahrzeugen, ist eine Reifendruckregelvorrichtung vorgesehen, um den Luftdruck in dem auf der Radnabe montierten Reifen auf einen erwünschten Wert einstellen zu können. Um die hierfür erforderliche Druckluft dem Reifen zuführen zu können, muss sie, beispielsweise ausgehend von einer zentralen Druckluftquelle, von dem jeweiligen Radträger auf die daran gelagerte Radnabe übertragen werden. Entsprechendes gilt in umgekehrter Richtung für ein Entleeren des Reifens. Dies wird durch die Drehdurchführung erreicht, die einen im Wesentlichen ringförmigen Zwischenraum zwischen dem Radträger und der Radnabe aufweist, in dem ein Druckluft-Ringraum ausgebildet ist. Dieser kommuniziert sowohl mit einem in dem Radträger vorgesehenen Druckluftkanal als auch mit einem in der Radnabe vorgesehenen Druckluftkanal. Auf diese Weise sind die genannten Druckluftkanäle auch bei rotierender Radnabe miteinander verbunden, so dass dem Reifen unabhängig von der Drehstellung der Radnabe über die Druckluftkanäle Druckluft zugeführt werden kann.

Für die erwünschte Reifendruckregelung werden mitunter sehr hohe Drücke erzeugt, beispielsweise bis zu ca. 7 bar. Daher muss ein in dem Zwischenraum zwischen dem Radträger und der Radnabe ausgebildeter Druckluft-Ringraum zuverlässig gegenüber der Umgebung und insbesondere gegenüber dem übrigen Zwischenraum abgedichtet sein. Dies kann etwa mittels Dichtringen, insbesondere Radialwellendichtringen, erfolgen, die den Druckluft-Ringraum beidseitig abgrenzen und insbesondere gegenüber im übrigen Zwischenraum ausgebildeten Schmiermittel-Ringräumen abdichten, die beispielsweise der Schmierung der Dichtringe und/oder von Lagern zur Lagerung der Radnabe an dem Radträger dienen können.

Damit der Druck im Reifen eines jeweiligen Kraftfahrzeugrads verändert werden kann, werden an der Radnabe steuerbare Ventile eingesetzt, also insbesondere Ventile, die wahlweise dazu angesteuert werden können, entweder Druckluft in eine jeweilige Befüllungs- bzw. Entleerungrichtung durchzulassen oder aber den Durchlass von Druckluft zu sperren. Systeme zur Reifendruckregelung können dabei beispielsweise einkanalig, d.h. mit lediglich einem einzigen zum Ventil führenden Druckluftkanal in der Radnabe, oder mehrkanalig, insbesondere zweikanalig, ausgebildet sein.

Bei zweikanaligen Systemen dient ein zusätzlich zum Ventil führender Druckluftkanal in der Radnabe allein dazu, die Schaltstellung des Ventils zu steuern. Zweikanalige Systeme haben den Vorteil, dass am Reifen, dessen Luftdruck regelbar sein soll, ein Standard-Ventil eingesetzt werden kann. Ein derartiges Standard-Ventil weist in der Regel einen Druckluftanschluss und einen Arbeitsanschluss (2/2-Wegeventil) sowie ggf. einen Entlüftungsanschluss (3/2-Wegeventil) auf. Zum Steuern des Ventils, also insbesondere zum Sperren bzw. (gerichteten) Öffnen des Ventils kann das Ventil zudem einen Steueranschluss aufweisen, der über den zusätzlichen Druckluftkanal betätigt wird. Über den an dem Steueranschluss anliegenden Druck bzw. die hierdurch an dem Steueranschluss verursachte Kraft kann dabei das Ventil wahlweise dazu angesteuert werden, zum Durchlass von Druckluft den Druckluftanschluss bzw. den Entlüftungsanschluss mit dem Arbeitsanschluss zu verbinden oder aber diese Anschlüsse gegeneinander zu sperren. Vorzugsweise ist das Ventil dabei in einen sperrenden Zustand vorgespannt, um bei einem Ausfall des Drucks bzw. der Kraft am Steueranschluss den Reifendruck aufrechtzuerhalten.

Der Nachteil eines solchen zweikanaligen Systems besteht darin, dass die Drehdurchführung wenigstens zwei Druckluftkanäle in der Radnabe aufweisen muss, so dass in dem Zwischenraum zwischen dem Radträger und der Radnabe auch wenigstens zwei Druckluft-Ringräume ausgebildet sein müssen, um die Druckluftkanäle der Radnabe mit zugeordneten Druckluftkanälen des Radträgers zu verbinden. Diese Druckluft-Ringräume, die ganz unterschiedliche Drücke aufweisen können, müssen zuverlässig und insbesondere auch gegeneinander abgedichtet sein, etwa indem zwischen ihnen und an den beiden Seiten jeweilige Dichtringe vorgesehen sind.

Um den Verschleiß der entlang des Radträgers oder der Radnabe gleitenden Dichtringe zu minimieren, kann Schmiermittel, beispielsweise Schmierfett oder Schmieröl, durch Schmiermittelkanäle aus dem Radträger in Schmiermittel-Ringräume geführt werden, die in dem genannten Zwischenraum zwischen dem Radträger und der Radnabe zusätzlich zu den Druckluft-Ringräumen vorgesehen sind. Hierdurch kann das Schmiermittel zu den jeweiligen den betreffenden Schmiermittel-Ringraum begrenzenden Dichtringen gelangen. Dadurch kann zwar der Verschleiß, nicht aber die vergleichsweise hohe Zahl von Verschleißteilen vermindert werden. Zudem bedarf eine solche Anordnung einer relativ großen Bautiefe (Erstreckung des genannten Zwischenraums entlang der Anordnungsrichtung der Dichtringe).

Eine Drehdurchführung eines solchen zweikanaligen Systems ist aus der Offenlegungsschrift DE 10 2009 057 158 A1 bekannt.

Demgegenüber wird bei einkanaligen Systemen die Ventilstellung durch Druckstöße innerhalb des Druckluftkanals der Radnabe gesteuert. Somit können einkanalige Systeme zwar eine geringere Bautiefe des genannten Zwischenraums und weniger Verschleißteile aufweisen, da zur Versorgung des Reifens mit Druckluft lediglich ein einziger Druckluftkanal in der Radnabe vorgesehen und daher auch lediglich ein einziger Druckluft-Ringraum im Zwischenraum zwischen dem Radträger und der Radnabe ausgebildet sein muss. Allerdings erfordert ein einkanaliges System die Verwendung eines Spezial-Ventils, das sich lediglich mittels des Druckluftanschlusses steuern lässt, der also zugleich als Drucklufteingang und als Steueranschluss fungiert. Ein derartiges Spezial-Ventil verursacht jedoch höhere Kosten und macht eine aufwendigere Regelung des Luftdrucks im Druckluftkanal zur definierten Erzeugung der Steuerdruckstöße erforderlich. Ferner besteht die Gefahr einer gewissen Störanfälligkeit.

Die Aufgabe der vorliegenden Erfindung besteht darin, eine Drehdurchführung mit einfachem und kompaktem Aufbau bereitzustellen, die verschleißarm und kostengünstig ist.

Diese Aufgabe wird durch eine Drehdurchführung mit den Merkmalen des Anspruchs 1 und insbesondere dadurch gelöst, dass in einem Zwischenraum zwischen dem Radträger und der Radnabe ein Druckluft-Ringraum und wenigstens ein Schmiermittel-Ringraum ausgebildet sind, die gegeneinander abgedichtet sind, wobei der Druckluft-Ringraum mit einem Druckluftkanal des Radträgers und mit einem Druckluftkanal der Radnabe kommuniziert, wobei der Druckluftkanal der Radnabe ferner mit einem steuerbaren Ventil kommuniziert, um einen Reifen des Kraftfahrzeugrades wahlweise mit Druckluft zu befüllen oder zu entleeren, und wobei der Schmiermittel-Ringraum mit einem Schmiermittelkanal des Radträgers und mit einem Schmiermittelkanal der Radnabe kommuniziert, wobei der Schmiermittelkanal der Radnabe zu einem Steueranschluss des Ventils führt, um das Ventil wahlweise zum Durchlass von Druckluft anzusteuern.

Durch eine solche Drehdurchführung lassen sich gleichzeitig die Vorteile gewöhnlicher einkanaliger und zweikanaliger Systeme zur Reifendruckregelung erzielen und die Nachteile dieser Systeme vermeiden. Denn einerseits kann es sich bei dem genannten steuerbaren Ventil um ein wie vorstehend beschriebenes Standard-Ventil handeln, das einfach und kostengünstig ist. Dabei kann der Druckluftkanal der Radnabe dem Druckluftanschluss des Ventils Druckluft zuführen, während das Ventil über den am Steueranschluss (direkt oder indirekt) anliegenden Druck des Schmiermittels gesteuert werden kann, das dem Steueranschluss durch den Schmiermittelkanal der Radnabe zugeführt wird. Im diesem Sinne handelt es sich bei der erfindungsgemäßen Drehdurchführung um ein zweikanaliges System, wobei sich die zwei Kanäle allerdings von sonstigen zweikanaligen Systemen insofern unterscheiden, als der eine Kanal Druckluft führt, der andere Kanal aber Schmiermittel.

Trotz der zwei Kanäle kann aber andererseits die Bautiefe der Drehdurchführung, d.h. ihre Ausdehnung bezogen auf den (radialen und/oder axialen) Zwischenraum zwischen dem Radträger und der Radnabe, vergleichsweise gering und der Bautiefe einer einkanaligen Lösung vergleichbar sein. Das wird dadurch erreicht, dass für die erfindungsgemäße Drehdurchführung die Ausbildung eines einzigen Druckluft-Ringraums in dem genannten Zwischenraum ausreichend ist. Da der zweite Kanal der Radnabe kein Druckluftkanal, sondern ein Schmiermittelkanal ist, kann zur Versorgung des zweiten Kanals und somit zur Steuerung des Ventils statt eines weiteren Druckluft-Ringraums ein Schmiermittel-Ringraum genutzt werden, welcher in dem genannten Zwischenraum zur Abdichtung des Druckluft-Ringraums typischerweise ohnehin vorhanden ist.

Zur Versorgung zweier Druckluftkanäle der Radnabe müssten hingegen zumindest zwei Druckluft-Ringräume in dem genannten Zwischenraum vorgesehen sein, die zudem (in der Regel durch einen dazwischen angeordneten Schmiermittel-Ringraum) gegeneinander abgedichtet sein und mit Schmierung versorgt werden müssten. Dagegen können bei der erfindungsgemäßen Drehdurchführung vorteilhafterweise der Druckluft-Ringraum zur Versorgung des einen (Druckluft-)Kanals der Radnabe und der Schmiermittel-Ringraum zur Versorgung des anderen (Schmiermittel-)Kanals der Radnabe unmittelbar aneinander angrenzen. Auf diese Weise wird die Bautiefe der Drehdurchführung minimiert und trägt zu einer kompakten Bauweise der Drehdurchführung bei.

Der Schmiermittel-Ringraum kann dabei durch den Schmiermittelkanal des Radträgers insbesondere mit Schmieröl oder Schmierfett oder einem sonstigen Schmiermittel versorgt werden. Dieses Schmiermittel kann dabei dazu dienen, Abdichtelemente wie etwa Dichtringe, insbesondere Radialwellendichtringe, zur Abdichtung des Druckluft-Ringraums zu schmieren, damit diese zuverlässig abdichten und gegen vorzeitigen Verschleiß geschützt werden. Bei der erfindungsgemäßen Drehdurchführung kann das Schmiermittel aber zusätzlich zu dieser Funktion gleichzeitig auch als Druckmedium dienen, dessen Druck beispielsweise radträgerseitig eingestellt werden und über den Zwischenraum zwischen dem Radträger und der Radnabe hinweg mittels des Schmiermittelkanals der Radnabe zum Ventil übertragen werden kann, um das Ventil zu steuern. Als Schmiermittel kann dabei insbesondere dasselbe Schmiermittel verwendet werden, das auch zur Schmierung sonstiger Bauteile eingesetzt wird, etwa zur Schmierung von Lagern zur Lagerung der Radnabe an dem Radträger oder eines Getriebes (z.B. eines Untersetzungsgetriebes zwischen einer im Radträger geführten Antriebswelle und der Radnabe).

Nachfolgend werden vorteilhafte Ausführungsformen der Erfindung erläutert.

Beispielsweise können der Druckluft-Ringraum und der Schmiermittel-Ringraum durch einen Dichtring gegeneinander abgegrenzt sein (in axialer oder radialer Richtung). Zur Abgrenzung des Druckluft-Ringraums und/oder des Schmiermittel-Ringraums ist der jeweilige Ringraum dabei insbesondere in zwei einander entgegengesetzten Richtungen (entsprechend der Erstreckung des zwischen dem Radträger und der Radnabe gebildeten Zwischenraums) durch einen jeweiligen Dichtring gegenüber dem übrigen Zwischenraum abgegrenzt. Die Verwendung von Dichtringen, bei denen es sich insbesondere um Radialwellendichtringe handeln kann, in einer solchen Anordnung stellt dabei eine zuverlässige Abdichtung der jeweiligen Ringräume sicher, ist konstruktiv einfach und ermöglich eine kompakte Drehdurchführung.

Bei einer bevorzugten Ausführungsform ist die Dichtwirkung des den Druckluft-Ringraum begrenzenden jeweiligen Dichtrings derart steuerbar, dass durch Erhöhen des Drucks eines in dem Schmiermittel-Ringraum befindlichen Schmiermittels eine Andruckkraft des Dichtrings bezüglich des Radträgers oder der Radnabe erhöht wird. Auf diese Weise können die Dichtringe sozusagen "schaltbar" sein. Damit ist gemeint, dass über den Druck des Schmiermittels die Andruckkraft jeweiliger Dichtringe und somit deren jeweilige Dichtwirkung einerseits und resultierender Verschleiß andererseits selektiv eingestellt werden können. Insbesondere kann die Andruckkraft vorübergehend verändert werden, um die Dichtwirkung der Dichtringe temporär anzupassen. Beispielsweise kann ein relativ niedriger Normaldruck des Schmiermittels ausreichen, dass ein zwischen dem Druckluft-Ringraum und einem jeweiligen Schmiermittel-Ringraum vorgesehener Dichtring diese Ringräume bei minimalem Verschleiß zuverlässig gegeneinander abdichtet. Um aber den Reifen des Kraftfahrzeugrades mit Druckluft zu befüllen, kann es erforderlich sein, den Druck der Druckluft auf einen Wert zu erhöhen, bei dem die im Normalfall vorgegebene Dichtwirkung nicht mehr ausreichen würde. Dann kann durch Erhöhen des Drucks des Schmiermittels die Dichtwirkung temporär so angepasst werden, dass auch während des für die Befüllung erhöhten Drucks der Druckluft der Druckluft-Ringraum zuverlässig abgedichtet ist. Wenn der Druck der Druckluft wieder nachlässt, können auch der Druck des Schmiermittels und damit die Andruckkraft wieder reduziert werden, um den von der Andruckkraft abhängigen Verschleiß der Dichtringe möglichst gering zu halten.

Der zwischen dem Radträger und der Radnabe gebildete Zwischenraum kann sich ausgehend von dem Radträger bis zu der Radnabe in radialer Richtung erstrecken, wobei in diesem Fall der Druckluft-Ringraum und der jeweilige Schmiermittel-Ringraum in axialer Richtung gegeneinander abgedichtet sind. Alternativ oder zusätzlich ist es jedoch auch möglich, dass der genannte Zwischenraum sich von dem Radträger zu der Radnabe in axialer Richtung erstreckt, wobei der Druckluft-Ringraum und der jeweilige Schmiermittel-Ringraum in radialer Richtung gegeneinander abgedichtet sind.

Vorzugsweise ist in dem genannten Zwischenraum zwischen dem Radträger und der Radnabe genau ein mit einem Druckluftkanal der Radnabe kommunizierender Druckluft-Ringraum ausgebildet. Grundsätzlich können auch weitere Druckluft-Ringräume zur zusätzlichen Versorgung desselben Druckluftkanals oder weiterer Druckluftkanäle der Radnabe vorgesehen sein. Eine besonders kompakte Bautiefe der Drehdurchführung wird aber dadurch erreicht, dass lediglich genau ein solcher Druckluft-Ringraum vorgesehen ist.

Des Weiteren ist es bevorzugt, wenn die Radnabe genau einen Druckluftkanal aufweist, der mit dem in dem genannten Zwischenraum ausgebildeten Druckluft-Ringraum kommuniziert. Wie bereits dargelegt kann die Radnabe zu sonstigen Zwecken auch weitere über den genannten Zwischenraum hinweg versorgte Druckluftkanäle aufweisen. Eine Drehdurchführung, bei der in der Radnabe lediglich ein Druckluftkanal vorgesehen ist, weist demgegenüber einen einfacheren Aufbau auf.

Bei einer möglichen Ausführungsform der Drehdurchführung können in dem genannten Zwischenraum zwischen dem Radträger und der Radnabe mehrere mit dem Schmiermittelkanal des Radträgers kommunizierende Schmiermittel-Ringräume ausgebildet sein. Beispielsweise kann der Druckluft-Ringraum zu seinen beiden Seiten hin an einen jeweiligen Schmiermittel-Ringraum angrenzen und auf diese Weise zuverlässig abgedichtet werden. Die jeweiligen Schmiermittel-Ringräume werden dabei gemeinsam über den genannten Schmiermittelkanal des Radträgers mit Schmiermittel versorgt.

Alternativ können aber auch in dem genannten Zwischenraum zwischen dem Radträger und der Radnabe mehrere Schmiermittel-Ringräume ausgebildet sein, die mit einem jeweiligen eigenen Schmiermittelkanal des Radträgers kommunizieren. Der Radträger kann also auch mehrere Schmiermittelkanäle zur Versorgung jeweils unterschiedlicher Schmiermittel-Ringräume aufweisen.

Unabhängig von der jeweiligen Ausführungsform weisen vorzugsweise alle Schmiermittel-Ringräume in dem genannten Sinne "schaltbare" Dichtringe zu ihrer Abdichtung bzw. zur Abdichtung des Druckluft-Ringraums auf.

Gemäß einer Weiterbildung einer der genannten Ausführungsformen mit mehreren Schmiermittel-Ringräumen kommuniziert genau einer der mehreren Schmiermittel-Ringräume mit dem Schmiermittelkanal der Radnabe. Eine solche Ausführungsform hat den konstruktiven Vorteil, dass der Schmiermittelkanal der Radnabe lediglich zu einem der Schmiermittel-Ringräume eine dichte Verbindung aufzuweisen braucht. Alternativ ist es allerdings auch möglich, dass mehrere der Schmiermittel-Ringräume mit dem Schmiermittelkanal der Radnabe kommunizieren. So kann der Schmiermitteldurchfluss der Drehdurchführung auf mehrere Schmiermittel-Ringräume verteilt werden.

Unabhängig von der sonstigen Ausführung der Drehdurchführung kann der Schmiermittelkanal der Radnabe mit dem Steueranschluss des Ventils direkt oder aber über eine Druckumsetzeinrichtung verbunden sein. Ob eine Druckumsetzeinrichtung erforderlich ist, hängt von dem verwendeten Ventil und insbesondere von dessen Steueranschluss ab. Wenn der Steueranschluss des Ventils geeignet ist, hydraulische Drücke unmittelbar in jeweilige Schaltzustände des Ventils umzusetzen, kann der Schmiermittelkanal der Radnabe direkt mit dem Steueranschluss verbunden sein, so dass auf eine Druckumsetzeinrichtung verzichtet werden kann. Demgegenüber kann es jedoch von Vorteil sein, besonders einfache und weit verbreitete mechanisch schaltbare Ventile, etwa 2/2- oder 3/2-Wegeventile, zu verwenden. Da deren Steueranschluss mitunter mechanisch betätigt wird, kann in diesem Fall eine Druckumsetzeinrichtung zwischengeschaltet werden, die eingangsseitig mit dem Schmiermittelkanal der Radnabe verbunden ist und den hydraulischen Druck des Schmiermittels ausgangsseitig in eine mechanische Bewegung, etwa eines Kolbens oder Stößels, umsetzt, durch die der Steueranschluss des Ventils dann betätigt wird.

Bei einer bevorzugten Ausführungsform sind in dem genannten Zwischenraum zwischen dem Radträger und der Radnabe zwei Schmiermittel-Ringräume (vorzugsweise genau zwei Schmiermittel-Ringräume) ausgebildet, wobei der Druckluft-Ringraum zwischen den zwei Schmiermittel-Ringräumen ausgebildet ist. Somit wird der Druckluft-Ringraum zu seinen beiden Seiten von einem Schmiermittel-Ringraum flankiert und auf diese Weise zuverlässig abgedichtet.

In diesem Zusammenhang ist es vorteilhaft, wenn die Drehdurchführung vier Dichtringe aufweist, wobei jeder der zwei Schmiermittel-Ringräume beidseits durch jeweils einen der vier Dichtringe begrenzt ist, wobei der Druckluft-Ringraum beidseits durch die beiden mittleren der vier Dichtringe begrenzt ist. Mit anderen Worten definieren die vier Dichtringe (z.B. in axialer oder radialer Folge) insgesamt drei Räume, nämlich zentral den Druckluft-Ringraum und an den beiden Seiten hierzu jeweils einen Schmiermittel-Ringraum. Die Dichtringe sorgen dabei für die Abdichtung insbesondere zwischen den Schmiermittel-Ringräumen und dem Druckluft-Ringraum.

Sofern der genannte Zwischenraum sich, wie vorstehend bereits erläutert, von dem Radträger zu der Radnabe in radialer Richtung erstreckt, kann der Druckluft-Ringraum axial zwischen den zwei Schmiermittel-Ringräumen ausgebildet sein, wobei der Druckluft-Ringraum und die zwei Schmiermittel-Ringräume in axialer Richtung durch die Dichtringe begrenzt sind.

Gemäß einer Weiterbildung ist es ferner bevorzugt, wenn jeder der genannten vier Dichtringe als ein Radialwellendichtring ausgebildet ist, welcher eine offene Vorderseite und einen geschlossenen, sich in radialer Richtung erstreckenden Rücken aufweist, wobei die offene Vorderseite eines jeden Radialwellendichtrings einem der zwei Schmiermittel-Ringräume zugewandt ist. Der Radialwellendichtring kann dabei im Wesentlichen" U"-förmig ausgebildet sein, so dass der Rücken die Basis des "U" bildet, von der aus die Schenkel des "U" axial wegweisen, und die offene Vorderseite durch den Bereich zwischen den Schenkelenden gebildet wird. Die Andruckkraft des radträgerseitigen und/oder des radnabenseitigen Schenkels eines solchen Radialwellendichtrings kann vorteilhafterweise vom Druck an der offenen Vorderseite des Radialwellendichtrings abhängig sein. Auf diese Weise können durch Druckänderungen innerhalb des jeweiligen Schmiermittel-Ringraums die Andruckkraft und somit die Dichtwirkung des Radialwellendichtrings an den jeweiligen Druck innerhalb des rückseitig angrenzenden Druckluft-Ringraums angepasst werden, um jeweils eine ausreichende Dichtwirkung bei möglichst geringem Verschleiß zu erzielen.

Im Zusammenhang mit der Erfindung ist noch anzumerken, dass die Richtungsangaben "axial" und "radial" sich generell auf die Rotationsachse der Radnabe beziehen.

Ferner ist anzumerken, dass die Begriffe "Radträger" und "Radnabe" nicht unbedingt ein einzelnes Bauelement bezeichnen, sondern sich auf die jeweilige Anordnung von fest miteinander verbundenen Teilen beziehen, da sowohl der Radträger als auch die Radnabe freilich auch mehrteilig ausgeführt sein können. Beispielsweise kann der Radträger auch eine austauschbare Verschleißhülse umfassen, auf der die einen jeweiligen Druckluft-Ringraum oder Schmiermittel-Ringraum abdichtenden Dichtringe gleiten, wie in Bezug auf die Figuren noch erläutert wird.

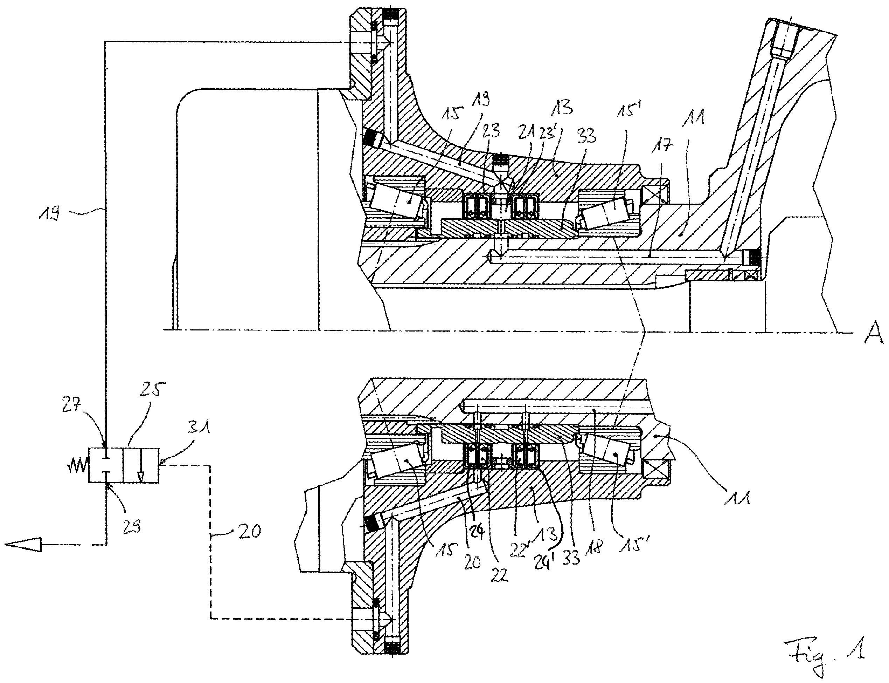

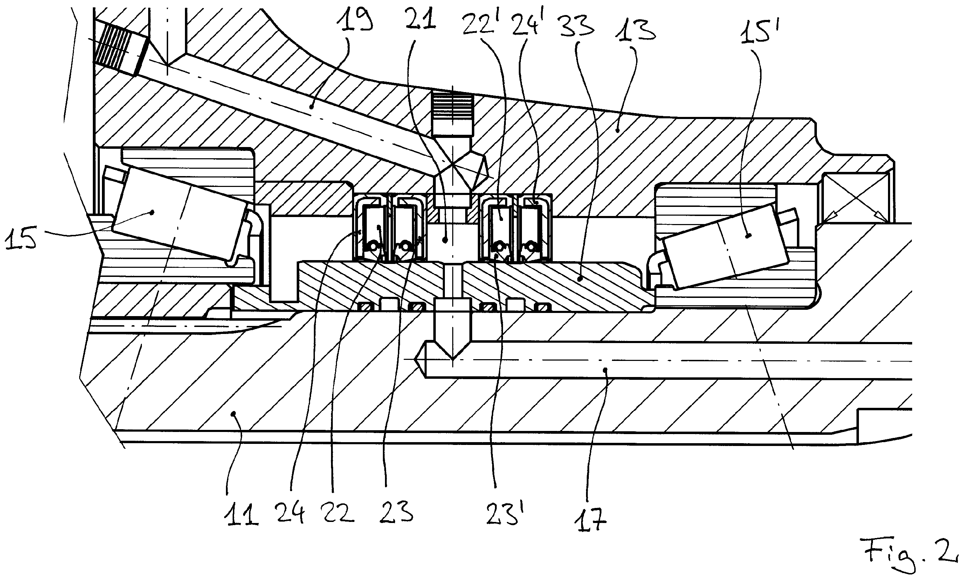

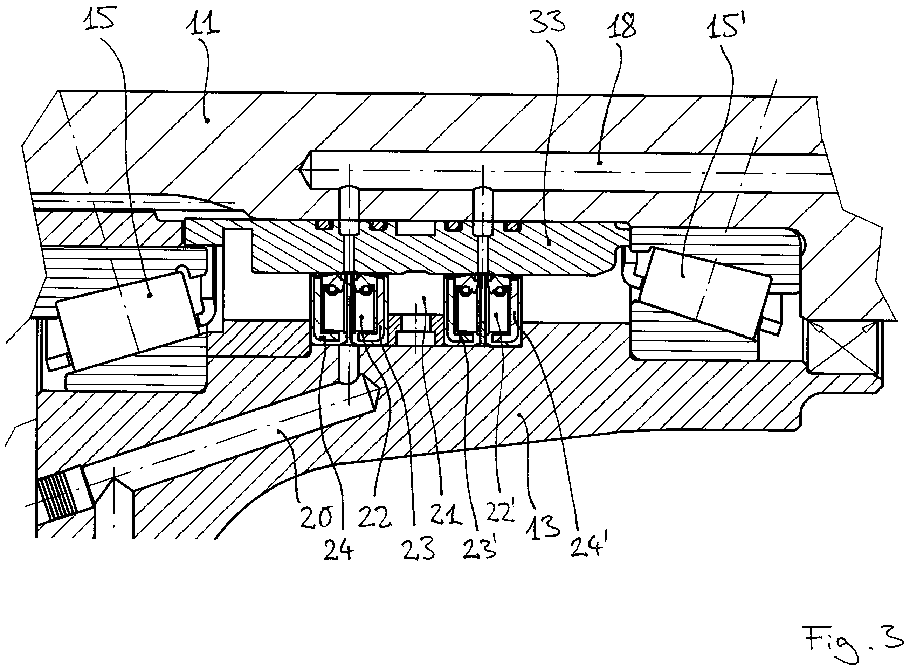

Die Erfindung wird nachfolgend lediglich beispielhaft noch unter Bezugnahme auf die Zeichnungen erläutert. Darin zeigt die Fig.1 einen Teil einer Drehdurchführung im Axialschnitt. Die Fig. 2 und 3 sind Detailansichten des oberen Teils bzw. des unteren Teils der Fig. 1.

Die gezeigte Drehdurchführung umfasst einen Radträger mit einem Achsschenkel 11, an dem eine Radnabe 13 bezüglich einer Rotationsachse A drehbar gelagert ist. Diese Lagerung ist über zwei Wälzlager 15, 15' bewerkstelligt, die hier als Kegelrollenlager ausgeführt sind.

An der Radnabe 13 ist ein Reifen des betreffenden Fahrzeugrads montiert (nicht gezeigt). Um den Luftdruck in dem Reifen auf einen erwünschten Wert einstellen zu können, ist in dem Achsschenkel 11 ein Druckluftkanal 17 vorgesehen (vgl. den oberen Teil der Fig. 1 sowie Fig. 2), der mit einer Druckluftquelle (nicht gezeigt) verbunden ist. Dieser Druckluftkanal 17 kommuniziert mit einem Druckluftkanal 19 der Radnabe 13, der an einen Druckluftanschluss 27 eines Ventils 25 mündet, welches an dem betreffenden Rad, insbesondere an der Radnabe 13 bzw. Felge angeordnet ist. Die Druckluftkanäle 17, 19 sind dabei über einen Druckluft-Ringraum 21, der in dem radialen Zwischenraum zwischen dem Achsschenkel 11 und der Radnabe 13 ausgebildet ist, unabhängig von der Drehstellung der Radnabe 13 relativ zum Achsschenkel 11 und grundsätzlich auch bei Drehung der Radnabe 13 miteinander verbunden. Auf diese Weise kann durch die Druckluftkanäle 17, 19 dem Ventil 25 Druckluft aus der Druckluftquelle zugeführt werden, um den Luftdruck in dem Reifen zu erhöhen. Auch eine Druckabsenkung im Reifen ist in entsprechender Weise möglich, wobei die Luft aus dem Reifen entweder der Druckluftquelle zugeführt wird (was freilich ein Druckgefälle in Richtung der Druckluftquelle voraussetzt) oder in die Umgebung abgelassen wird (wofür das Ventil 25 jedoch als 3/2-Wegeventil mit einem Entlüftungsanschluss und einem Entlüftungskanal in der Radnabe 13 auszuführen ist, nicht gezeigt).

Bei dem gezeigten Ventil 25 handelt es sich um ein steuerbares 2/2-Wegeventil, das über einen Steueranschluss 31 wahlweise gesperrt oder dazu angesteuert werden kann, Druckluft vom Druckluftanschluss 27 zu einem Arbeitsanschluss 29 (in Pfeilrichtung) durchzulassen. Der Arbeitsanschluss 29 steht dabei mit dem Innenraum des Reifens in Verbindung, so dass der Reifen mit Druckluft aus den Druckluftkanälen 17, 19 befüllt werden kann. Das Ventil 25 ist in einen sperrenden Zustand vorgespannt.

Axial an den genannten Druckluft-Ringraum 21 zur Verbindung der Druckluftkanäle 17, 19 angrenzend ist zu beiden Seiten ein jeweiliger Schmiermittel-Ringraum 22, 22' ausgebildet (vgl. den unteren Teil der Fig. 1 sowie Fig. 3), der gegenüber dem Druckluft-Ringraum 21 durch Dichtringe 23, 23' abgedichtet ist. Die Dichtringe 23, 23' sind dabei als Radialwellendichtringe mit einer offenen Vorderseite und einem geschlossenen, sich in radialer Richtung erstreckenden Rücken ausgebildet. Jeder der Radialwellendichtringe 23, 23' ist - bezogen auf den gezeigten Axialschnitt - im Wesentlichen "U"-förmig, wobei die offene Vorderseite dem jeweiligen Schmiermittel-Ringraum 22, 22' zugewandt ist. Der jeweilige Radialwellendichtring 23, 23' liegt mit einem Schenkel des "U" (einer radial außen gelegenen Sitzfläche) an einer inneren Mantelfläche der Radnabe 13 kraftschlüssig und somit drehfest an. Der andere Schenkel des "U" (eine radial innen gelegene Dichtfläche) ist dem Achsschenkel 11 zugewandt und liegt an einer zylindrischen Lauffläche einer optionalen Verschleißhülse 33 dichtend an, die mit dem Achsschenkel 11 fest verbunden ist.

Das Vorsehen einer Verschleißhülse 33 hat den Vorteil, dass nicht der gesamte Radträger ausgetauscht werden muss, wenn die Dichtungslaufflächen eingelaufen sind, sondern dass es ausreicht, lediglich die Verschleißhülse 33 auszutauschen. Ferner bietet die Verschleißhülse 33 den Vorteil einer einfachen Bearbeitbarkeit. Alternativ zu der Verwendung der Verschleißhülse 33 können die Radialwellendichtringe 23, 23' jedoch auch direkt auf dem Achsschenkel 11 angeordnet sein.

Axial nach außen, d.h. auf der von dem Druckluft-Ringraum 21 abgewandten jeweiligen Seite, sind die Schmiermittel-Ringräume 22, 22' durch einen jeweiligen Radialwellendichtring 24 bzw. 24' abgedichtet. Somit ist jeder der zwei Schmiermittel-Ringräume 22, 22' beidseits durch jeweils einen der vier Radialwellendichtringe 23, 23', 24, 24' begrenzt, wobei der Druckluft-Ringraum 21 beidseits durch die beiden mittleren 23, 23' der vier Radialwellendichtringe begrenzt ist. Auch die beiden äußeren Radialwellendichtringe 24, 24' besitzen eine offene Vorderseite und einen geschlossenen Rücken, wobei die offene Vorderseite wiederum dem jeweiligen Schmiermittel-Ringraum 22, 22' zugewandt ist.

In dem Achsschenkel 11 ist neben dem Druckluftkanal 17 auch ein Schmiermittelkanal 18 ausgebildet, der an einem Ende direkt oder indirekt mit einer Schmiermittelquelle verbunden ist (nicht gezeigt; z.B. Pumpe oder pneumatisch-hydraulischer Druckumsetzer innerhalb eines im Wesentlichen geschlossenen Schmiermittelkreislaufs). An dem gezeigten anderen Ende kommuniziert der Schmiermittelkanal 18 mit den Schmiermittel-Ringräumen 22, 22' und versorgt diese mit Schmiermittel, etwa Schmieröl. Dabei kann über den Schmiermittelkanal 18 der Druck des Schmiermittels in den Schmiermittel-Ringräumen 22, 22' eingestellt werden, um die Andruckkraft der Dichtringe 23, 23' an die Verschleißhülse 33 anzupassen. Insbesondere kann der Druck in den Schmiermittel-Ringräumen 22, 22' vorübergehend erhöht werden, wenn auch der Druck in dem Druckluft-Ringraum 21 zur Befüllung des Reifens erhöht ist. Auf diese Weise kann eine an die jeweilige Situation angepasste zuverlässige Abdichtung des Druckluft-Ringraums 21 bei minimalem Verschleiß erzielt werden.

Ferner ist auch in der Radnabe 13 zusätzlich zu dem Druckluftkanal 19 ein Schmiermittelkanal 20 vorgesehen, der mit einem der Schmiermittel-Ringräume 22, 22' kommuniziert, so dass der Schmiermittelkanal 18 des Achsschenkels 11 und der Schmiermittelkanal 20 der Radnabe 13 über den Schmiermittel-Ringraum 22 miteinander verbunden sind. Der Schmiermittelkanal 20 der Radnabe 13 mündet an den Steueranschluss 31 des Ventils 25. Somit kann nicht nur der Druck in den Schmiermittel-Ringräumen 22, 22', sondern auch der an dem Steueranschluss 31 des Ventils 25 anliegende Druck eingestellt und darüber das Ventil 25 gesteuert werden. Dabei kann der Steueranschluss 31 des Ventils 25 mit dem Schmiermittelkanal 20 direkt verbunden sein, wenn er geeignet ist, den Druck des Schmiermittels in dem Schmiermittelkanal 20 unmittelbar auszuwerten und in einen jeweiligen Zustand des Ventils 25 umzusetzen. Ansonsten kann zwischen dem Schmiermittelkanal 20 und dem Steueranschluss 31 eine Druckumsetzeinrichtung (nicht dargestellt) vorgesehen sein, durch die der hydraulische Druck des Schmiermittels in dem Schmiermittelkanal 20 etwa in eine mechanische Betätigung des Steueranschlusses 31 des Ventils 25 umgesetzt wird.

Während das Schmiermittel und dessen Druck in dem einen Schmiermittel-Ringraum 22', der nicht (direkt) mit dem Schmiermittelkanal 20 der Radnabe 13 verbunden ist, primär dazu dient, den zugeordneten Dichtring 23' zur zuverlässigen Abdichtung des Druckluft-Ringraums 21 (sowie den Dichtring 24' und optional auch angrenzende Lager 15, 15' oder weitere Elemente) zu schmieren und den Verschleiß zu verringern, hat der andere Schmiermittel-Ringraum 22 zugleich außerdem eine ergänzende Funktion. Über diesen Schmiermittel-Ringraum 22 kann nämlich nach demselben Prinzip wie bei dem Druckluft-Ringraum 21 unabhängig von der Drehstellung der Radnabe 13 relativ zum Achsschenkel 11 Schmiermittel an den Schmiermittelkanal 20 der Radnabe 13 übertragen werden, so dass die Schmiermittelkanäle 18, 20 des Achsschenkels 11 und der Radnabe 13 permanent über den Schmiermittel-Ringraum 22 miteinander kommunizieren.

Auf diese Weise kann die Reifendruckregelung zwar zweikanalig ausgeführt sein. Es ist jedoch nicht erforderlich, hierfür einen weiteren Druckluft-Ringraum im Zwischenraum zwischen dem Achsschenkel 11 und der Radnabe 13 vorzusehen, da anstelle eines zweiten Druckluftkanals in der Radnabe 13 ein Schmiermittelkanal 20 ausgebildet ist, der von einem der zur Abdichtung des Druckluft-Ringraums 21 ohnehin vorgesehenen Schmiermittel-Ringräume 22, 22' mit Schmiermittel versorgt werden kann. Somit ist für das Ansteuern des Ventils 25 letztlich nur der zusätzliche Schmiermittelkanal 20 innerhalb der Radnabe 13 erforderlich. Dies erlaubt eine für ein einfaches zweikanaliges System besonders kompakte Bauweise der Drehdurchführung (geringe Bautiefe entlang der Anordnungsrichtung der Radialwellendichtringe 23, 23', 24, 24', d.h. in axialer Richtung). Vorteilhafterweise wird dabei für die Steuerung des Ventils 25 das für das Schmieren der Wälzlager 15, 15' vorgesehene Schmiermittel verwendet.

Abweichend von der Darstellung in den Zeichnungen ist es grundsätzlich auch möglich, dass der jeweilige Radialwellendichtring 23, 23', 24, 24' eine an dem Radträger (Achsschenkel 11) kraftschlüssig anliegende, radial innere Sitzfläche und eine entlang der rotierenden Radnabe 13 gleitende, radial äußere Dichtfläche aufweist.

Ferner kann der zwischen dem Radträger 11 und der Radnabe 13 gebildete Zwischenraum abweichend von der Darstellung in den Zeichnungen sich ausgehend von dem Radträger 11 zu der Radnabe 13 in einer axialen Richtung erstrecken, wobei in diesem Fall der Druckluft-Ringraum 21 und der jeweilige Schmiermittel-Ringraum 22, 22' in radialer Richtung gegeneinander abgedichtet sind.

### Bezugszeichenliste

- 11: Achsschenkel
- 13: Radnabe
- 15, 15': Wälzlager
- 17: Druckluftkanal des Achsschenkels
- 18: Schmiermittelkanal des Achsschenkels
- 19: Druckluftkanal der Radnabe
- 20: Schmiermittelkanal der Radnabe
- 21: Druckluft-Ringraum
- 22,22': Schmiermittel-Ringraum
- 23, 23': Radialwellendichtring
- 24, 24': Radialwellendichtring
- 25: Ventil
- 27: Druckluftanschluss
- 29: Arbeitsanschluss
- 31: Steuerungsanschluss
- 33: Verschleißhülse
- A: Rotationsachse

## Patentansprüche

1. Drehdurchführung für ein Kraftfahrzeugrad mit Reifendruckregelung, mit einem Radträger (11) und einer an dem Radträger (11) drehbar gelagerten Radnabe (13),
wobei in einem Zwischenraum zwischen dem Radträger (11) und der Radnabe (13) ein Druckluft-Ringraum (21) und wenigstens ein Schmiermittel-Ringraum (22, 22') ausgebildet sind, die gegeneinander abgedichtet sind, wobei der Druckluft-Ringraum (21) mit einem Druckluftkanal (17) des Radträgers (11) und mit einem Druckluftkanal (19) der Radnabe (13) kommuniziert,
wobei der Druckluftkanal (19) der Radnabe (13) ferner mit einem steuerbaren Ventil (25) kommuniziert, um einen Reifen des Kraftfahrzeugrades wahlweise mit Druckluft zu befüllen oder zu entleeren, und
wobei der Schmiermittel-Ringraum (22, 22') mit einem Schmiermittelkanal (18) des Radträgers (11) kommuniziert,
**dadurch gekennzeichnet,**
**dass** der Schmiermittel-Ringraum (22, 22') zudem mit einem Schmiermittelkanal (20) der Radnabe (13) kommuniziert, welcher zu einem Steueranschluss (31) des Ventils (25) führt, um das Ventil (25) wahlweise zum Durchlass von Druckluft anzusteuern.

2. Drehdurchführung nach Anspruch 1,
**dadurch gekennzeichnet,**
**dass** der Druckluft-Ringraum (21) und der Schmiermittel-Ringraum (22, 22') durch einen Dichtring (23, 23') gegeneinander abgegrenzt sind.

3. Drehdurchführung nach Anspruch 2,
**dadurch gekennzeichnet,**
**dass** der Druckluft-Ringraum (21) und/oder der Schmiermittel-Ringraum (22, 22') in zwei einander entgegengesetzten Richtungen durch einen jeweiligen Dichtring (23, 23', 24, 24') gegenüber dem übrigen Zwischenraum zwischen dem Radträger (11) und der Radnabe (13) abgegrenzt ist/sind.

4. Drehdurchführung nach Anspruch 2 oder 3,
**dadurch gekennzeichnet,**
**dass** die Dichtwirkung des den Druckluft-Ringraum (21) begrenzenden jeweiligen Dichtrings (23, 23') derart steuerbar ist, dass durch Erhöhen des Drucks eines in dem Schmiermittel-Ringraum (22, 22') befindlichen Schmiermittels eine Andruckkraft des Dichtrings (23, 23') bezüglich des Radträgers (11) oder der Radnabe (13) erhöht wird.

5. Drehdurchführung nach einem der vorhergehenden Ansprüche,
**dadurch gekennzeichnet,**
**dass** der Zwischenraum sich von dem Radträger (11) zu der Radnabe (13) in radialer Richtung erstreckt, wobei der Druckluft-Ringraum (21) und der Schmiermittel-Ringraum (22, 22') in axialer Richtung gegeneinander abgedichtet sind.

6. Drehdurchführung nach einem der vorhergehenden Ansprüche,
**dadurch gekennzeichnet,**
**dass** in dem Zwischenraum zwischen dem Radträger (11) und der Radnabe (13) genau ein mit dem Druckluftkanal (19) der Radnabe kommunizierender Druckluft-Ringraum (21) ausgebildet ist.

7. Drehdurchführung nach einem der vorhergehenden Ansprüche,
**dadurch gekennzeichnet,**
**dass** die Radnabe (13) genau einen mit dem Druckluft-Ringraum (21) kommunizierenden Druckluftkanal (19) aufweist.

8. Drehdurchführung nach einem der vorhergehenden Ansprüche,
**dadurch gekennzeichnet,**
**dass** in dem Zwischenraum zwischen dem Radträger (11) und der Radnabe (13) mehrere Schmiermittel-Ringräume (22, 22') ausgebildet sind, die mit dem Schmiermittelkanal (17) des Radträgers (11) oder mit einem jeweiligen eigenen Schmiermittelkanal des Radträgers kommunizieren.

9. Drehdurchführung nach Anspruch 8,
**dadurch gekennzeichnet,**
**dass** genau einer (22) der Schmiermittel-Ringräume oder mehrere der Schmiermittel-Ringräume mit dem Schmiermittelkanal (20) der Radnabe (13) kommunizieren.

10. Drehdurchführung nach einem der vorhergehenden Ansprüche,
**dadurch gekennzeichnet,**
**dass** der Schmiermittelkanal (20) der Radnabe (13) mit dem Steueranschluss (31) des Ventils (25) direkt oder über eine Druckumsetzeinrichtung verbunden ist.

11. Drehdurchführung nach einem der vorhergehenden Ansprüche,
**dadurch gekennzeichnet,**
**dass** in dem Zwischenraum zwischen dem Radträger (11) und der Radnabe (13) zwei Schmiermittel-Ringräume (22, 22') ausgebildet sind und der Druckluft-Ringraum (21) zwischen den zwei Schmiermittel-Ringräumen (22, 22') ausgebildet ist.

12. Drehdurchführung nach Anspruch 11,
**dadurch gekennzeichnet,**
**dass** die Drehdurchführung vier Dichtringe (23, 23', 24, 24') aufweist, wobei jeder der zwei Schmiermittel-Ringräume (22, 22') beidseits durch jeweils einen der vier Dichtringe (23, 23', 24, 24') begrenzt ist, wobei der Druckluft-Ringraum (21) beidseits durch die beiden mittleren (23, 23') der vier Dichtringe begrenzt ist.

13. Drehdurchführung nach Anspruch 12,
**dadurch gekennzeichnet,**
**dass** der Zwischenraum sich von dem Radträger (11) zu der Radnabe (13) in radialer Richtung erstreckt, wobei der Druckluft-Ringraum (21) axial zwischen den zwei Schmiermittel-Ringräumen (22, 22') ausgebildet ist, und wobei der Druckluft-Ringraum (21) und die zwei Schmiermittel-Ringräume (22, 22') in axialer Richtung durch die Dichtringe (23, 23', 24, 24') begrenzt sind.

14. Drehdurchführung nach Anspruch 12 oder 13,
**dadurch gekennzeichnet,**
**dass** jeder der vier Dichtringe (23, 23', 24, 24') als ein Radialwellendichtring ausgebildet ist, welcher eine offene Vorderseite und einen geschlossenen, sich in radialer Richtung erstreckenden Rücken aufweist, wobei die offene Vorderseite eines jeden Radialwellendichtrings einem der zwei Schmiermittel-Ringräume (22, 22') zugewandt ist.

## Claims

1. A rotary feedthrough for a motor vehicle wheel having tire pressure regulation, having a wheel carrier (11) and having a wheel hub (13) rotatably supported on the wheel carrier (11),
wherein a compressed air annular space (21) and at least one annular lubricant space (22, 22'), which are sealed with respect to one another, are formed in an intermediate space between the wheel carrier (11) and the wheel hub (13), wherein the compressed air annular space (21) communicates with a compressed air passage (17) of the wheel carrier (11) and with a compressed air passage (19) of the wheel hub (13),
wherein the compressed air passage (19) of the wheel hub (13) furthermore communicates with a controllable valve (25) in order to selectively fill a tire of the motor vehicle wheel with compressed air or to deflate the tire, and wherein the annular lubricant space (22, 22') communicates with a lubricant passage (18) of the wheel carrier (11),
**characterized in that**
the annular lubricant space (22, 22') also communicates with a lubricant passage (20) of the wheel hub (13), which lubricant passage leads to a control port (31) of the valve (25) in order to selectively control the valve (25) for the passage of compressed air.

2. A rotary feedthrough in accordance with claim 1,
**characterized in that**
the compressed air annular space (21) and the annular lubricant space (22, 22') are bounded from one another by a sealing ring (23, 23').

3. A rotary feedthrough in accordance with claim 2,
**characterized in that**
the compressed air annular space (21) and/or the annular lubricant space (22, 22') is/are bounded in two mutually opposite directions by a respective sealing ring (23, 23', 24, 24') with respect to the remaining intermediate space between the wheel carrier (11) and the wheel hub (13).

4. A rotary feedthrough in accordance with claim 2 or claim 3,
**characterized in that**
the sealing effect of the respective sealing ring (23, 23') bounding the compressed air annular space (21) is controllable such that a pressing force of the sealing ring (23, 23') is increased with respect to the wheel carrier (11) or the wheel hub (13) by increasing the pressure of a lubricant located in the annular lubricant space (22, 22').

5. A rotary feedthrough in accordance with any one of the preceding claims,
**characterized in that**
the intermediate space extends from the wheel carrier (11) to the wheel hub (13) in a radial direction, with the compressed air annular space (21) and the annular lubricant space (22, 22') being sealed with respect to one another in an axial direction.

6. A rotary feedthrough in accordance with any one of the preceding claims,
**characterized in that**
exactly one compressed air annular space (21) communicating with the compressed air passage (19) of the wheel hub is formed in the intermediate space between the wheel carrier (11) and the wheel hub (13).

7. A rotary feedthrough in accordance with any one of the preceding claims,
**characterized in that**
the wheel hub (13) comprises exactly one compressed air passage (19) communicating with the compressed air annular space (21).

8. A rotary feedthrough in accordance with any one of the preceding claims,
**characterized in that**
a plurality of annular lubricant spaces (22, 22'), which communicate with the lubricant passage (17) of the wheel carrier (11) or with a respective separate lubricant passage of the wheel carrier, are formed in the intermediate space between the wheel carrier (11) and the wheel hub (13).

9. A rotary feedthrough in accordance with claim 8,
**characterized in that**
exactly one (22) of the annular lubricant spaces or a plurality of the annular lubricant spaces communicates/communicate with the lubricant passage (20) of the wheel hub (13).

10. A rotary feedthrough in accordance with any one of the preceding claims,
**characterized in that**
the lubricant passage (20) of the wheel hub (13) is connected to the control port (31) of the valve (25) directly or via a pressure converter.

11. A rotary feedthrough in accordance with any one of the preceding claims,
**characterized in that**
two annular lubricant spaces (22, 22') are formed in the intermediate space between the wheel carrier (11) and the wheel hub (13), and **in that** the compressed air annular space (12) is formed between the two annular lubricant spaces (22, 22').

12. A rotary feedthrough in accordance with claim 11,
**characterized in that**
the rotary feedthrough comprises four sealing rings (23, 23', 24, 24'), wherein each of the two annular lubricant spaces (22, 22') is bounded at both sides by a respective one of the four sealing rings (23, 23', 24, 24'), and wherein the compressed air annular space (21) is bounded at both sides by the two middle ones (23, 23') of the four sealing rings.

13. A rotary feedthrough in accordance with claim 12,
**characterized in that**
the intermediate space extends from the wheel carrier (11) to the wheel hub (13) in a radial direction, wherein the compressed air annular space (21) is formed axially between the two annular lubricant spaces (22, 22'), and wherein the compressed air annular space (21) and the two annular lubricant spaces (22, 22') are bounded by the sealing rings (23, 23', 24, 24') in an axial direction.

14. A rotary feedthrough in accordance with claim 12 or claim 13,
**characterized in that**
each of the four sealing rings (23, 23', 24, 24') is formed as a radial shaft sealing ring which comprises an open front side and a closed back which extends in a radial direction, with the open front side of each radial shaft sealing ring facing one of the two annular lubricant spaces (22, 22').

## Revendications

1. Passage tournant pour une roue de véhicule automobile avec système de contrôle de pression de gonflage, comportant un support de roue (11) et un moyeu de roue (13) monté rotatif sur le support de roue (11), dans lequel un espace annulaire à air comprimé (21) et au moins un espace annulaire à lubrifiant (22, 22') étanchés l'un par rapport à l'autre sont réalisés dans un intervalle entre le support de roue (11) et le moyeu de roue (13),
et l'espace annulaire à air comprimé (21) est en communication avec un canal à air comprimé (17) du support de roue (11) et avec un canal à air comprimé (19) du moyeu de roue (13),
dans lequel le canal à air comprimé (19) du moyeu de roue (13) est en outre en communication avec une vanne commandée (25) pour gonfler à l'air comprimé ou dégonfler au choix un pneumatique de la roue de véhicule automobile, et
dans lequel l'espace annulaire à lubrifiant (22, 22') est en communication avec un canal à lubrifiant (18) du support de roue (11),
**caractérisé en ce que**
l'espace annulaire à lubrifiant (22, 22') est en outre en communication avec un canal à lubrifiant (20) du moyeu de roue (13), qui mène vers un raccord de commande (31) de la vanne (25), afin de piloter au choix la vanne (25) pour laisser passer de l'air comprimé.

2. Passage tournant selon la revendication 1,
**caractérisé en ce que**
l'espace annulaire à air comprimé (21) et l'espace annulaire à lubrifiant (22, 22') sont délimités l'un par rapport à l'autre par un anneau d'étanchéité (23, 23').

3. Passage tournant selon la revendication 2,
**caractérisé en ce que**
l'espace annulaire à air comprimé (21) et/ou l'espace annulaire à lubrifiant (22, 22') sont délimités par rapport au reste de l'intervalle entre le support de roue (11) et le moyeu de roue (13) dans deux directions mutuellement opposées par un anneau d'étanchéité respectif (23, 23', 24, 24').

4. Passage tournant selon la revendication 2 ou 3,
**caractérisé en ce que**
l'effet d'étanchéité de l'anneau d'étanchéité (23, 23') délimitant l'espace annulaire à air comprimé (21) est commandable de telle sorte qu'une augmentation de la pression du lubrifiant situé dans l'espace annulaire à lubrifiant (22, 22') provoque une augmentation de la force de pressage de l'anneau d'étanchéité (23, 23') par rapport au support de roue (11) ou au moyeu de roue (13).

5. Passage tournant selon l'une des revendications précédentes,
**caractérisé en ce que**
l'intervalle s'étend du support de roue (11) jusqu'au moyeu de roue (13) en direction radiale, et l'espace annulaire à air comprimé (21) et l'espace annulaire à lubrifiant (22, 22') sont étanchés l'un vis-à-vis de l'autre en direction axiale.

6. Passage tournant selon l'une des revendications précédentes,
**caractérisé en ce que**
dans l'intervalle entre le support de roue (11) et le moyeu de roue (13) est réalisé précisément un espace annulaire à air comprimé (21) qui est en communication avec le canal à air comprimé (19) du moyeu de roue.

7. Passage tournant selon l'une des revendications précédentes,
**caractérisé en ce que**
le moyeu de roue (13) comprend précisément un canal à air comprimé (19) qui est en communication avec l'espace annulaire à air comprimé (21).

8. Passage tournant selon l'une des revendications précédentes,
**caractérisé en ce que**
dans l'intervalle entre le support de roue (11) et le moyeu de roue (13) sont réalisés plusieurs espaces annulaires à lubrifiant (22, 22') qui sont en communication avec le canal à lubrifiant (17) du support de roue (11) ou avec un canal à lubrifiant respectif propre du support de roue.

9. Passage tournant selon la revendication 8,
**caractérisé en ce que**
précisément un (22) des espaces annulaires à lubrifiant ou plusieurs des espaces annulaires à lubrifiant est/sont en communication avec le canal à lubrifiant (20) du moyeu de roue (13).

10. Passage tournant selon l'une des revendications précédentes,
**caractérisé en ce que**
le canal à lubrifiant (20) du moyeu de roue (13) est relié au raccord de commande (31) de la vanne (25) soit directement soit via un dispositif convertisseur de pression.

11. Passage tournant selon l'une des revendications précédentes,
**caractérisé en ce que**
deux espaces annulaires à lubrifiant (22, 22') sont réalisés dans l'intervalle entre le support de roue (11) et le moyeu de roue (13), et l'espace annulaire à air comprimé (21) est réalisé entre les deux espaces annulaires à lubrifiant (22, 22').

12. Passage tournant selon la revendication 11,
**caractérisé en ce que**
le passage tournant comprend quatre anneaux d'étanchéité (23, 23', 24, 24'), chacun des deux espaces annulaires à lubrifiant (22, 22') étant délimité de part et d'autre par l'un des quatre anneaux d'étanchéité (23, 23', 24, 24'), l'espace annulaire à air comprimé (21) étant délimité de part et d'autre par les deux anneaux médians (23, 23') des quatre anneaux d'étanchéité.

13. Passage tournant selon la revendication 12,
**caractérisé en ce que**
l'intervalle s'étend du support de roue (11) jusqu'au moyeu de roue (13) en direction radiale, l'espace annulaire à air comprimé (21) étant réalisé axialement entre les deux espaces annulaires à lubrifiant (22, 22'), et l'espace annulaire à air comprimé (21) et les deux espaces annulaires à lubrifiant (22, 22') sont délimités en direction axiale par les anneaux d'étanchéité (23, 23', 24, 24').

14. Passage tournant selon la revendication 12 ou 13,
**caractérisé en ce que**
chacun des quatre anneaux d'étanchéité (23, 23', 24, 24') est réalisé sous la forme d'un anneau d'étanchéité radial pour arbre, qui comprend un côté avant ouvert et un côté arrière fermé s'étendant en direction radiale, le côté avant ouvert de chaque anneau d'étanchéité radial pour arbre étant tourné vers l'un des deux espaces annulaires à lubrifiant (22, 22').
